# EUROPÄISCHE PATENTSCHRIFT

(11) **EP 3 080 307 B1**
(45) Veröffentlichungstag und Bekanntmachung des Hinweises auf die Patenterteilung: **30.09.2020**
(21) Anmeldenummer: 14815580.7
(22) Anmeldetag: 11.12.2014
(51) Int. Cl.: C21B 5/06, C21B 7/00, C21C 5/38, C01B 3/32, C10K 3/04, C10K 3/06, C25B 15/08, C25B 1/04

(54) **VERFAHREN ZUR ERZEUGUNG VON SYNTHESEGAS IM VERBUND MIT EINEM HÜTTENWERK**
METHOD FOR GENERATING SYNTHESIS GAS IN CONJUNCTION WITH A SMELTING WORKS
PROCÉDÉ DE PRODUCTION DE GAZ DE SYNTHÈSE EN LIAISON AVEC UNE USINE SIDÉRURGIQUE

(30) Priorität: 12.12.2013 DE 102013113933
(43) Veröffentlichungstag der Anmeldung: 19.10.2016
(73) Patentinhaber: thyssenkrupp AG, 45143 Essen (DE)
(72) Erfinder: ACHATZ, Reinhold, 45259 Essen (DE); WAGNER, Jens, 60439 Frankfurt a.M. (DE); OLES, Markus, 45527 Hattingen (DE); SCHMÖLE, Peter, 44141 Dortmund (DE); KLEINSCHMIDT, Ralph, 45472 Mülheim a.d.R. (DE); KROTOV, Denis, 44263 Dortmund (DE); VON MORSTEIN, Olaf, 45149 Essen (DE); BÜKER, Karsten, 44137 Dortmund (DE)
(74) Vertreter: thyssenkrupp Intellectual Property GmbH
(86) Internationale Anmeldenummer: PCT/EP2014/003317
(87) Internationale Veröffentlichungsnummer: WO 2015/086151

(56) Entgegenhaltungen:
- EP-A1- 0 244 551
- EP-A1- 2 657 215
- EP-A2- 0 200 880
- WO-A1-2010/136313

## Beschreibung

Die Erfindung betrifft ein Verfahren zur Erzeugung von Synthesegas im Verbund mit einem Hüttenwerk, welches zumindest einen Hochofen zur Roheisenerzeugung, ein Konverterstahlwerk und eine Koksofenanlage umfasst.

Im Hochofen wird aus Eisenerzen, Zuschlägen sowie Koks und anderen Reduktionsmitteln wie Kohle, Öl, Gas, Biomassen, aufbereiteten Altkunststoffen oder sonstigen Kohlenstoff und/oder Wasserstoff enthaltenden Stoffen Roheisen gewonnen. Als Produkte der Reduktionsreaktionen entstehen zwangsläufig CO, CO₂, Wasserstoff und Wasserdampf. Ein aus dem Hochofenprozess abgezogenes Hochofengichtgas weist neben den vorgenannten Bestandteile häufig einen hohen Gehalt an Stickstoff auf. Die Gasmenge und die Zusammensetzung des Hochofengichtgases ist abhängig von den Einsatzstoffen und der Betriebsweise und unterliegt Schwankungen. Typischerweise enthält Hochofengichtgas jedoch 35 bis 60 Vol.-% N₂, 20 bis 30 Vol.-% CO, 20 bis 30 Vol.-% CO₂ und 2 bis 15 Vol.-% H₂. Rund 30 bis 40% des bei der Roheisenerzeugung entstehenden Hochofengichtgases wird im Regelfall zum Aufheizen des Heißwindes für den Hochofenprozess in Winderhitzern eingesetzt; die verbleibende Gichtgasmenge kann in anderen Werksbereichen zu Heizzwecken oder zur Stromerzeugung genutzt werden.

Im Konverterstahlwerk, das dem Hochofenprozess nachgeschaltet ist, wird Roheisen zu Rohstahl umgewandelt. Durch Aufblasen von Sauerstoff auf flüssiges Roheisen werden störende Verunreinigungen wie Kohlenstoff, Silizium, Schwefel und Phosphor entfernt. Da die Oxidationsprozesse eine starke Wärmeentwicklung verursachen, wird häufig Schrott in Mengen bis zu 25 % bezogen auf das Roheisen als Kühlmittel zugesetzt. Ferner werden Kalk zur Schlackenbildung und Legierungsmittel zugegeben. Aus dem Stahlkonverter wird ein Konvertergas abgezogen, welches einen hohen Gehalt an CO aufweist und ferner Stickstoff, Wasserstoff und CO₂ enthält. Eine typische Konvertergaszusammensetzung weist 50 bis 70 Vol.-% CO, ca. 10 bis 20 Vol.-% N₂, ca. 15 Vol.-% CO₂ und ca. 2 Vol.-% H₂ auf. Das Konvertergas wird entweder abgefackelt oder bei modernen Stahlwerken aufgefangen und einer energetischen Nutzung zugeführt.

In der Koksofenanlage wird Kohle durch einen Verkokungsprozess in Koks umgewandelt. Dabei fällt ein Koksofengas an, welches einen hohen Wasserstoffgehalt und beachtliche Mengen an CH₄ enthält. Typischerweise enthält Koksofengas 55 bis 70 Vol.-% H₂, 20 bis 30 Vol.-% CH₄, ca. 5 bis 10 Vol.-% N₂ und ca. 5 Vol.-% CO. Zusätzlich weist das Koksofengas Anteile von CO₂, NH₃ und H₂S auf. In der Praxis wird das Koksofengas in verschiedenen Werksbereichen zu Heizzwecken und im Kraftwerksprozess zur Stromerzeugung genutzt. Darüber hinaus ist es bekannt, Koksofengas zusammen mit Hochofengichtgas oder mit Konvertergas zur Erzeugung von Synthesegasen zu verwenden. Gemäß einem aus WO 2010/136313 A1 bekannten Verfahren wird Koksofengas aufgetrennt in einen wasserstoffreichen Gasstrom und einen CH₄ und CO enthaltenen Restgasstrom, wobei der Restgasstrom dem Hochofenprozess zugeführt wird und der wasserstoffreiche Gasstrom mit Hochofengichtgas gemischt und zu einem Synthesegas weiterverarbeitet wird. Aus EP 0 200 880 A2 ist es bekannt, Konvertergas und Koksofengas zu mischen und als Synthesegas für eine Methanolsynthese zu nutzen.

In einem integrierten Hüttenwerk, welches im Verbund mit einer Kokerei betrieben wird, werden etwa 40 bis 50 % der als Hochofengichtgas, Konvertergas und Koksofengas anfallenden Rohgase für verfahrenstechnische Prozesse eingesetzt. Etwa 50 bis 60 % der entstehenden Gase können zur Stromerzeugung verwendet oder als Rohgase zur Synthesegaserzeugung genutzt werden. Durch Verwendung der Gase zur Synthesegaserzeugung kann die Wirtschaftlichkeit eines Hüttenwerks verbessert werden. Gleichzeitig verbessert sich auch die CO₂-Bilanz des Hüttenwerks, da Kohlenstoff in chemischen Produkten gebunden wird und nicht in Form von CO₂ emittiert wird. Dabei ist allerdings zu berücksichtigen, dass die Rohgasmenge, die zur Synthesegaserzeugung verwendet werden kann, erheblichen zeitlichen Schwankungen unterliegt.

Sofern die Rohgase nämlich zur Synthesegaserzeugung verwendet werden, muss die Stromerzeugung durch ein im Verbund mit dem Hüttenwerk betriebenes Kraftwerk gedrosselt und Strom aus externen Quellen zur Deckung des Strombedarfs des Hüttenwerks bezogen werden. Wenn Strom kostengünstig und in ausreichenden Mengen z. B. aus erneuerbaren Energiequellen zur Verfügung steht, kann eine große Rohgasmenge zur Synthesegaserzeugung eingesetzt werden. Bei einem hohen Strompreis für den extern bezogenen Strom ist es aus wirtschaftlichen Erwägungen hingegen notwendig, die im Hüttenwerk anfallende nutzbare Rohgasmenge zumindest überwiegend zur Stromerzeugung einzusetzen und die Synthesegasproduktion zu drosseln. Vor diesem Hintergrund liegt der Erfindung die Aufgabe zugrunde, ein Verfahren zur Erzeugung von Synthesegas im Verbund mit einem Hüttenwerk anzugeben, mit dem es möglich ist, die in einem Hüttenwerk in unterschiedlichen Mengen und unterschiedlicher Zusammensetzung anfallenden Rohgase möglichst vollständig in wirtschaftlichen Prozessen zu nutzen.

Gegenstand der Erfindung und Lösung dieser Aufgabe ist ein Verfahren nach Anspruch 1. Vorteilhafte Ausgestaltungen des erfindungsgemäßen Verfahrens werden in den Ansprüchen 2 bis 10 beschrieben.

Erfindungsgemäß wird ein Teil des bei der Roheisenerzeugung entstehenden Hochofengichtgases und/oder ein Teil des im Konverterstahlwerk anfallenden Konvertergases und/oder ein Teil des in der Koksofenanlage entstehenden Koksofengases gemischt. Dabei werden durch Wahl der zu einem Mischgas zusammengeführten Gasströme und/oder durch Änderung der Mischungsverhältnisse der zusammengeführten Gasströme zwei oder mehr Nutzgasströme erzeugt, die sich hinsichtlich ihrer Zusammensetzung unterscheiden und jeweils zu Synthesegasströmen aufbereitet werden.

Die Aufbereitung der Nutzgasströme umfasst insbesondere eine Gasreinigung und eine Gaskonditionierung. Zur Gaskonditionierung kann beispielsweise ein Steam Reforming mit Wasserdampf, eine partielle Oxidation mit Luft oder Sauerstoff und eine Wasser-Gas-Shift-Reaktion zur Konvertierung eines CO-Anteils eingesetzt werden. Die Konditionierungsschritte können einzeln oder auch in Kombination zur Anwendung kommen.

Bei den nach dem erfindungsgemäßen Verfahren hergestellten Synthesegasströmen handelt es sich um Gasmischungen, die zur Synthese eingesetzt werden. Unter den Begriff "Synthesegas" fallen z. B. Gemische aus N₂ und H₂ für die Ammoniaksynthese und vor allem Gasgemische, die hauptsächlich CO und H₂ oder CO₂ und H₂ oder CO, CO₂ und H₂ enthalten. Aus den Synthesegasen können in einer Chemieanlage chemische Produkte erzeugt werden, welche jeweils die Komponenten des Eduktes enthalten. Chemische Produkte können beispielsweise Ammoniak oder Methanol oder auch andere Kohlenwasserstoffverbindungen sein.

Zur Herstellung von Ammoniak muss ein Synthesegas bereitgestellt werden, welches Stickstoff und Wasserstoff im richtigen Verhältnis enthält. Der Stickstoff kann aus Hochofengichtgas gewonnen werden. Als Wasserstoffquelle kann insbesondere Hochofengichtgas oder Konvertergas verwendet werden, wobei Wasserstoff durch Konvertierung des CO-Anteils durch eine Wasser-Gas-Shift-Reaktion (CO + H₂O ⇄ CO₂ + H₂) erzeugt wird. Zur Erzeugung eines Synthesegases für die Ammoniaksynthese kann auch eine Mischung aus Koksofengas und Hochofengichtgas oder ein Mischgas aus Koksofengas, Konvertergas und Hochofengichtgas verwendet werden. Zur Herstellung von Kohlenwasserstoffverbindungen, beispielsweise Methanol, muss ein im Wesentlichen aus und / oder CO₂ und H₂ bestehendes Synthesegas bereitgestellt werden, welches die Komponenten Kohlenmonoxid und / oder Kohlendioxid und Wasserstoff im richtigen Verhältnis enthält. Das Verhältnis wird häufig durch das Modul (H₂ - CO₂) / (CO + CO₂) beschrieben. Der Wasserstoff kann beispielsweise durch Konvertierung des CO-Anteils im Hochofengichtgas durch eine Wasser-Gas-Shift-Reaktion erzeugt werden. Zur Bereitstellung von CO kann Konvertergas herangezogen werden. Als CO₂-Quelle kann Hochofengichtgas und/oder Konvertergas dienen. Zur Herstellung von Kohlenwasserstoffverbindungen eignet sich auch ein Mischgas aus Koksofengas und Konvertergas und Konvertergas oder ein Mischgas aus Koksofengas, Konvertergas und Hochofengichtgas.

Anstelle einer Chemieanlage zur Erzeugung von chemischen Produkten aus Synthesegas kann im Rahmen der Erfindung auch eine biotechnologische Anlage eingesetzt werden. Hierbei handelt es sich um eine Anlage zur Fermentation von Synthesegas. Unter Synthesegas sind in diesem Fall Mischungen aus CO und H₂ zu verstehen, mit denen Alkohole, Aceton oder organische Säuren hergestellt werden können. Der Wasserstoff kommt bei Anwendung eines biochemischen Prozesses allerdings im Wesentlichen aus dem Wasser, das bei der Fermentation als Medium eingesetzt wird. Als CO-Quelle wird vorzugsweise Konvertergas verwendet. Der Einsatz von Hochofengichtgas oder ein Mischgas aus Konvertergas und Hochofengichtgas ist ebenfalls möglich. Die Verwendung von Koksofengas ist für einen biotechnologischen Prozess hingegen ungünstig. Mittels eines biotechnologischen Prozesses können folglich Produkte hergestellt werden, die Kohlenstoff aus dem CO-Anteil der in einem Hüttenwerk anfallenden Rohgase und Wasserstoff aus dem bei einem Fermentationsprozess verwendeten Wasser enthalten.

Mit dem erfindungsgemäßen Verfahren können aus Rohgasen, die in einem Hüttenwerk bei der Roheisenerzeugung, bei der Rohstahlerzeugung und bei der Produktion von Koks anfallen, gleichzeitig Synthesegasströme erzeugt werden, die in einer Chemieanlage und in einer parallel dazu betriebenen biotechnologischen Anlage zur Herstellung von chemischen Produkten genutzt werden. Die Chemieanlage und die biotechnologische Anlage sind parallel geschaltet und können gleichzeitig oder auch im Wechsel betrieben werden. Dies ermöglicht eine wirtschaftliche Betriebsweise des Hüttenwerks, vor allem auch dann, wenn die zur Synthesegaserzeugung nutzbaren Gasmengen täglichen Schwankungen unterworfen sind.

Eine vorteilhafte Ausgestaltung des erfindungsgemäßen Verfahrens sieht vor, dass ein erster H₂ enthaltender Nutzgasstrom gebildet wird, aus dem durch Gaskonditionierung ein erstes Synthesegas erzeugt wird, welches als Hauptbestandteile beispielsweise CO und H₂ oder N₂ und H₂ enthält, und dass ein im Wesentlichen H₂-freier zweiter Nutzgasstrom erzeugt wird, welcher als Hauptbestandteil CO enthält. Der zweite Nutzgasstrom kann insbesondere aus Konvertergas oder Hochofengichtgas oder einem aus Konvertergas und Hochofengichtgas gebildeten Mischgas bestehen.

Eine weitere Ausführungsvariante des erfindungsgemäßen Verfahrens sieht vor, dass ein erster Nutzgasstrom durch Mischung von zumindest zwei Gasströmen, die als Hochofengichtgas, Konvertergas oder Koksofengas anfallen, gebildet wird und dass ein zweiter Nutzgasstrom nur aus Hochofengichtgas, Konvertergas oder Koksofengas besteht.

Das Koksofengas und/oder das Hochofengichtgas wird zweckmäßig bereits vor der Verwendung als Nutzgas gereinigt, wobei mittels der Reinigung unter anderem Ruß, hochsiedende Kohlenwasserstoffe, aromatische Kohlenwasserstoffe (BTX), Schwefel und Schwefelverbindungen entfernt werden. Dabei werden die Nutzgasströme zweckmäßig vor einer Gaskonditionierung gereinigt.

Eine weitere Ausgestaltung des erfindungsgemäßen Verfahrens sieht vor, dass der Wasserstoffgehalt zumindest eines Nutzgasstromes durch Abtrennung von Wasserstoff, z. B. mittels einer Druckwechseladsorptionsanlage, oder durch Anreichern mit Wasserstoff eingestellt wird. Der zum Anreichern notwendige Wasserstoff kann im Hüttenwerk beispielsweise durch Wasserelektrolyse erzeugt werden. Ferner kann der Wasserstoffgehalt zumindest eines Nutzgasstromes durch Konvertierung von CO in einer Wasser-Gas-Shift-Reaktion oder durch Reformieren von CH₄ eingestellt werden.

Im Folgenden wird die Erfindung anhand einer lediglich ein Ausführungsbeispiel darstellenden Zeichnung erläutert.

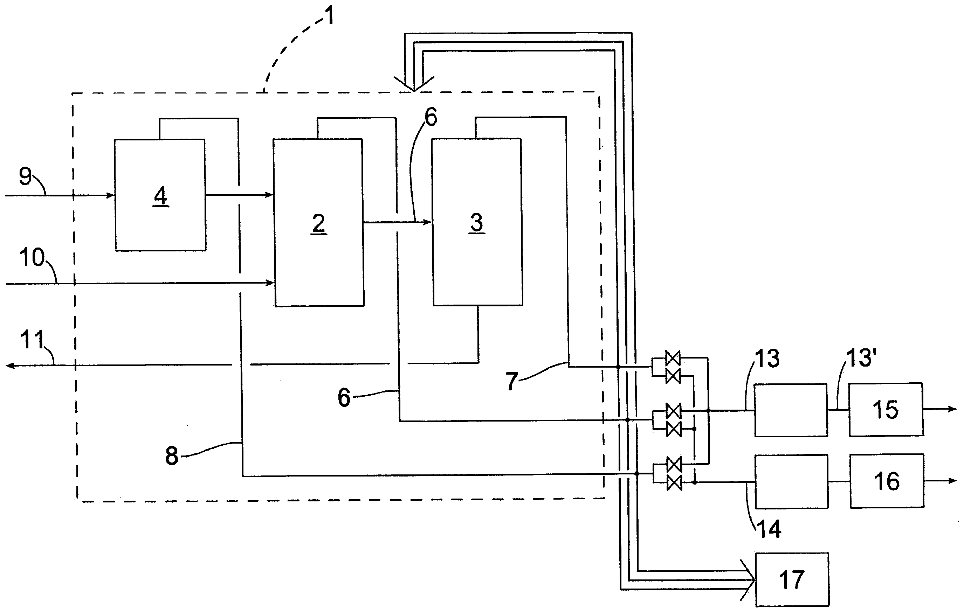

Der in der Figur dargestellte Anlagenverbund umfasst ein Hüttenwerk 1, welches zumindest einen Hochofen 2 zur Roheisenerzeugung, ein Konverterstahlwerk 3 und eine Koksofenanlage 4 umfasst.

Im Hochofen 2 wird im Wesentlichen aus Eisenerz und Reduktionsmitteln, insbesondere Koks und Kohle, Öl, Gas, Biomassen und aufbereiteten Kunststoffen oder sonstigen Kohlenstoff und / oder Wasserstoff enthaltenden Verbindungen Roheisen gewonnen. Durch Reduktionsreaktion entsteht ein Hochofengichtgas 6, welches als Hauptbestandteil Stickstoff, CO, CO₂ und einen geringen Anteil H₂ enthält. In dem Konverterstahlwerk 3, das dem Hochofenprozess nachgeschaltet ist, wird Roheisen zu Stahl umgewandelt. Durch Aufblasen von Sauerstoff auf das flüssige Roheisen werden störende Verunreinigungen, insbesondere Kohlenstoff, Silizium und Phosphor entfernt. Am Kopf des Konverters wird ein Konvertergas 7 abgezogen, welches einen hohen Anteil an CO aufweist. Das Hüttenwerk 1 umfasst auch eine Koksofenanlage 4. Bei der Verkokung von Kohle zu Koks fällt Koksofengas 8 an, welches einen hohen Anteil an Wasserstoff und CH₄ enthält.

Gemäß einer in der Figur dargestellten Gesamtbilanz wird dem Anlagenverbund Kohlenstoff 9 als Reduktionsmittel in Form von Kohle und Koks sowie Eisenerz 10 zugeführt. Als Produkte fallen Rohstahl 11 und Rohgase 6, 7 und 8 an, die sich in Menge, Zusammensetzung und Reinheit unterscheiden und an verschiedenen Stellen im Anlagenverbund wieder eingesetzt werden. Bei einer Gesamtbetrachtung werden 40 bis 50 %, zumeist etwa 45 %, der Rohgase 6, 7 und 8 wieder in das Hüttenwerk 1 zur Roheisenerzeugung oder Rohstahlerzeugung zurückgeführt.. Zwischen 50 und 60 %, zumeist etwa 55 %, der Rohgase 6, 7 und 8 können zur Herstellung von Synthesegas genutzt werden.

Gemäß dem in der Figur dargestellten Anlagenschema wird ein Teil des bei der Roheisenerzeugung entstehenden Hochofengichtgases 6 und/oder ein Teil des im Konverterstahlwerk 3 anfallenden Konvertergases 7 und/oder ein Teil des in der Koksofenanlage 4 entstehenden Koksofengases 8 gemischt, wobei durch Wahl der zu einem Mischgas zusammengeführten Gasströme und/oder durch Änderung der Mischungsverhältnisse der zusammengeführten Gasströme zumindest zwei Nutzgasströme 13, 14 erzeugt werden, die sich hinsichtlich ihrer Zusammensetzung unterscheiden und jeweils zu Synthesegasströmen aufbereitet werden.

Im Ausführungsbeispiel wird ein erster H₂-enthaltender Nutzgasstrom 13 gebildet, aus dem durch Gaskonditionierung ein erstes Synthesegas 13' erzeugt wird, welches als Hauptbestandteile beispielsweise CO und H₂ oder N₂ und H₂ enthält. In einer Chemieanlage 15 wird das Synthesegas 13' zur Synthese von chemischen Produkten, z. B. Ammoniak, Methanol oder anderen Kohlenwasserstoffverbindungen genutzt. Ferner wird ein im Wesentlichen H₂-freier zweiter Nutzgasstrom 14 erzeugt welcher als Hauptbestandteil CO enthält. Der zweite Nutzgasstrom 14 besteht aus Konvertergas 7 oder Hochofengichtgas 6 oder einem aus Konvertergas 7 und Hochofengichtgas 6 gebildeten Mischgas. In einer biotechnologischen Anlage 16 werden Produkte hergestellt, die Kohlenstoff aus dem CO-Anteil der genannten Gase und Wasserstoff enthalten. Dabei stammt der Wasserstoff im Wesentlichen aus dem Wasser, der bei der Fermentation als Medium eingesetzt wird. Die Chemieanlage 15 und die biotechnologische Anlage 16 können parallel oder auch wechselweise betrieben werden. Sie sind im Ausführungsbeispiel parallel mit einem Kraftwerk 17 geschaltet, welches als Gasturbinenkraftwerk oder Gasturbinen- und Dampfkraftwerk ausgelegt ist und mit Koksofengas 8, Hochofengichtgas 6 oder Konvertergas 7 oder einem aus diesen Gaskomponenten zusammengesetzten Mischgas betrieben wird. Zur Deckung des Strombedarfes des Anlagenverbundes wird extern bezogener Strom und Kraftwerkstrom, der von dem Kraftwerk 17 des Anlagenverbundes erzeugt wird, herangezogen. Zur Erreichung eines möglichst wirtschaftlichen Betriebs des Anlagenverbundes wird Strom in Zeiten niedriger Strompreise zugekauft und der Betrieb des Kraftwerkes 17 gedrosselt. Entsprechend kann ein großer Rohgasmengenstrom zur Synthesegaserzeugung genutzt werden. Wenn externer Strom z. B. aus erneuerbarer Energien nicht in ausreichendem Maße und zu akzeptablen Preisen verfügbar ist, wird die Synthesegasproduktion reduziert und die Rohgas 6, 7, 8 verstärkt im Kraftwerk 17 zur Stromerzeugung genutzt.

## Patentansprüche

1. Verfahren zur Erzeugung von Synthesegas im Verbund mit einem Hüttenwerk (1), welches zumindest einen Hochofen (2) zur Roheisenerzeugung, ein Konverterstahlwerk (3) und eine Koksofenanlage (4) umfasst,
wobei ein Teil des bei der Roheisenerzeugung entstehenden Hochofengichtgases (6) und/oder ein Teil des im Konverterstahlwerk (3) anfallenden Konvertergases (7) und/oder ein Teil des in der Koksofenanlage (4) entstehenden Koksofengases (8) gemischt wird,
wobei durch Wahl der zu einem Mischgas zusammengeführten Gasströme und/oder durch Änderung der Mischungsverhältnisse der zusammengeführten Gasströme zumindest zwei Nutzgasströme (13, 14) erzeugt werden, die sich hinsichtlich ihrer Zusammensetzung unterscheiden und jeweils zu Synthesegasströmen aufbereitet werden,
wobei ein erster Nutzgasstrom (13) durch Mischung von zumindest zwei Gasströmen, die als Hochofengichtgas (6), Konvertergas (7) oder Koksofengas (8) anfallen, gebildet wird und dass ein zweiter Nutzgasstrom (14) nur aus Hochofengichtgas (6), Konvertergas (7) oder Koksofengas (8) besteht und
wobei ein erster H₂-enthaltender Nutzgasstrom (13) gebildet wird, aus dem durch Gaskonditionierung ein erstes Synthesegas (13') erzeugt wird, welches als Hauptbestandteile beispielsweise CO und H₂ oder N₂ und H₂ enthält, und dass ein zweiter im Wesentlichen H₂-freier zweiter Nutzgasstrom (14) erzeugt wird, welcher als Hauptbestandteil CO enthält,
und wobei die Nutzgasströme (13, 14) zu Synthesegasströmen aufbereitet werden, die sich hinsichtlich ihrer Zusammensetzung unterscheiden und zur Herstellung von unterschiedlichen Chemieprodukten verwendet werden.

2. Verfahren nach Anspruch 1, **dadurch gekennzeichnet, dass** die Aufbereitung der Nutzgasströme (13, 14) eine Gasreinigung und eine Gaskonditionierung umfasst.

3. Verfahren nach Anspruch 2, **dadurch gekennzeichnet, dass** zur Gaskonditionierung eine Dampfreformierung mit Wasserdampf und/oder eine partielle Oxidation mit Luft oder Sauerstoff und/oder eine Wasser-Gas-Shift-Reaktion eingesetzt wird.

4. Verfahren nach einem der Ansprüche 1 bis 3, **dadurch gekennzeichnet, dass** der zweite Nutzgasstrom (14) aus Konvertergas (7) oder Hochofengichtgas (6) oder einem aus Konvertergas (7) und Hochofengichtgas (6) gebildeten Mischgas besteht.

5. Verfahren nach einem der Ansprüche 1 bis 4, **dadurch gekennzeichnet, dass** das Koksofengas (8) und/oder das Hochofengichtgas (6) vor der Verwendung als Nutzgas gereinigt wird, wobei mittels der Reinigung unter anderem Ruß, hochsiedende Kohlenwasserstoffe, aromatische Kohlenwasserstoffe (BTX), Schwefel und Schwefelverbindungen entfernt werden.

6. Verfahren nach einem der Ansprüche 1 bis 4, **dadurch gekennzeichnet, dass** die Nutzgasströme (13, 14) vor einer Gaskonditionierung gereinigt werden, wobei mittels der Reinigung unter anderem Ruß, hochsiedende Kohlenwasserstoffe, aromatische Kohlenwasserstoffe, Schwefel und Schwefelverbindungen entfernt werden.

7. Verfahren nach einem der Ansprüche 1 bis 6, **dadurch gekennzeichnet, dass** der Wasserstoffgehalt zumindest eines Nutzgasstromes (13, 14) durch Abtrennung von Wasserstoff, z. B. mittels einer Druckwechseladsorptionsanlage, oder durch Anreichern mit Wasserstoff eingestellt wird.

8. Verfahren nach einem der Ansprüche 1 bis 7, **dadurch gekennzeichnet, dass** zumindest einer der Nutzgasströme (13, 14) mit Wasserstoff angereichert wird, das im Hüttenwerk (1) vorzugsweise durch Wasserelektrolyse erzeugt wird.

9. Verfahren nach einem der Ansprüche 1 bis 8, **dadurch gekennzeichnet, dass** der Wasserstoffgehalt zumindest eines Nutzgasstromes (13, 14) durch Konvertierung von CO in einer Wasser-Gas-Shift-Reaktion eingestellt wird.

10. Verfahren nach Anspruch 8 oder 9, **dadurch gekennzeichnet, dass** der Wasserstoffgehalt zumindest eines Nutzgasstromes (13, 14) durch Reformieren von CH₄ eingestellt wird.

## Claims

1. Method for producing syngas in combined operation with a metallurgical plant (1) which comprises at least one blast furnace (2) for producing pig iron, a converter steel works (3) and a coke-oven plant (4),
wherein a part of the blast-furnace top gas (6) that is produced in the production of pig iron and/or part of the converter gas (7) that occurs in the converter steel works (3) and/or a part of the coke-oven gas (8) that is produced in the coke-oven plant (4) being mixed,
wherein by choosing the gas streams that are brought together to form a mixed gas and/or changing the mixing ratios of the gas streams that are brought together having the effect that at least two streams of useful gas (13, 14) are produced, differing with regard to their composition and respectively prepared to form streams of syngas,
wherein a first stream of useful gas (13) is formed by mixing at least two gas streams that occur as blast-furnace top gas (6), converter gas (7) or coke-oven gas (8), and that a second stream of useful gas (14) consists only of blast-furnace top gas (6), converter gas (7) or coke-oven gas (8)
and wherein a first stream of useful gas (13), containing H₂, is formed and by gas conditioning is turned into a first syngas (13'), which contains for example CO and H₂ or N₂ and H₂ as the main constituents, and that a second stream of useful gas (14), which is substantially free from H₂ and contains CO as the main constituent, is produced
and wherein the streams of useful gas (13, 14) are prepared to form streams of syngas, which differ with respect to their composition and are used for producing different chemical products.

2. Method according to Claim 1, **characterized in that** preparation of the streams of useful gas (13, 14) comprises a gas-cleaning operation and a gas-conditioning operation.

3. Method according to Claim 2, **characterized in that** a steam-reforming operation with water vapour and/or a partial oxidation with air or oxygen and/or a water-gas-shift reaction is used for the gas conditioning.

4. Method according to one of Claims 1 to 3, **characterized in that** the second stream of useful gas (14) consists of converter gas (7) or blast-furnace top gas (6) or a mixed gas formed from converter gas (7) and blast-furnace top gas (6).

5. Method according to one of Claims 1 to 4, **characterized in that** the coke-oven gas (8) and/or the blast-furnace top gas (6) is cleaned before being used as useful gas, the cleaning having the effect of removing inter alia carbon black, high-boiling hydrocarbons, aromatic hydrocarbons (BTX), sulphur and sulphur compounds.

6. Method according to one of Claims 1 to 4, **characterized in that** the streams of useful gas (13, 14) are cleaned before a gas-conditioning operation, the cleaning having the effect of removing inter alia carbon black, high-boiling hydrocarbons, aromatic hydrocarbons, sulphur and sulphur compounds.

7. Method according to one of Claims 1 to 6, **characterized in that** the hydrogen content of at least one stream of useful gas (13, 14) is set by separating out hydrogen, for example by means of a pressure swing adsorption plant, or by enriching with hydrogen.

8. Method according to one of Claims 1 to 7, **characterized in that** at least one of the streams of useful gas (13, 14) is enriched with hydrogen that is produced in the metallurgical plant (1) preferably by electrolysis of water.

9. Method according to one of Claims 1 to 8, **characterized in that** the hydrogen content of at least one stream of useful gas (13, 14) is set by converting CO in a water-gas-shift reaction.

10. Method according to Claim 8 or 9, **characterized in that** the hydrogen content of at least one stream of useful gas (13, 14) is set by reforming CH₄.

## Revendications

1. Procédé de production de gaz de synthèse en liaison avec une usine sidérurgique (1), qui comprend au moins un haut fourneau (2) pour la production de fonte brute, une aciérie de conversion (3) et une installation de four à coke (4),
dans lequel une partie du gaz de gueulard de haut fourneau (6) qui se forme lors de la production de fonte brute et/ou une partie du gaz de convertisseur (7) obtenu dans l'aciérie de conversion (3) et/ou une partie du gaz de haut fourneau (8) qui se forme dans l'installation de haut fourneau (4) sont mélangées,
dans lequel, grâce au choix des courants gazeux combinés en un gaz mixte et/ou par modification du rapport de mélange des courants gazeux combinés, au moins deux courants de gaz utile (13, 14) sont produits, qui se distinguent par leur composition, et dont chacun est traité pour donner des courants de gaz de synthèse,
dans lequel un premier courant de gaz utile (13) est formé par mélange d'au moins deux courants gazeux qui apparaissent sous forme de gaz de gueulard de haut fourneau (6), de gaz de convertisseur (7) ou de gaz de four à coke (8), et un deuxième courant de gaz utile (14) est formé uniquement à partir de gaz de gueulard de haut fourneau (6), de gaz de convertisseur (7) ou de gaz de four à coke (8), et
dans lequel un premier courant de gaz utile (13) contenant du H₂ est formé, à partir duquel on produit par conditionnement des gaz un premier gaz de synthèse (13'), qui contient en tant que constituants principaux par exemple du CO et du H₂ ou du N₂ et du H₂, et un deuxième courant de gaz utile (14), pour l'essentiel exempt de H₂, étant produit, qui contient du CO en tant que constituant principal,
et dans lequel les courants de gaz utile (13, 14) sont traités pour donner des courants de gaz de synthèse qui se distinguent par leur composition et sont utilisés pour la fabrication de différents produits chimiques.

2. Procédé selon la revendication 1, **caractérisé en ce que** le traitement des courants de gaz utile (13, 14) comprend une purification du gaz et un conditionnement du gaz.

3. Procédé selon la revendication 2, dans lequel on utilise pour le conditionnement du gaz un vaporeformage à la vapeur d'eau et/ou une oxydation partielle avec de l'air et de l'oxygène et/ou une réaction du gaz à l'eau.

4. Procédé selon l'une des revendications 1 à 3, **caractérisé en ce que** le deuxième courant de gaz utile (14) est constitué de gaz de convertisseur (7) ou de gaz de gueulard de haut fourneau (6) ou d'un gaz mixte formé de gaz de convertisseur (7) et de gaz de gueulard de haut fourneau (6).

5. Procédé selon l'une des revendications 1 à 4, **caractérisé en ce que** le gaz de four à coke (8) et/ou le gaz de gueulard de haut fourneau (6) sont purifiés avant utilisation en tant que gaz utile, ce à l'occasion de quoi on élimine grâce à la purification entre autres la suie, les hydrocarbures à haut point d'ébullition, les hydrocarbures aromatiques (BTX), le soufre et les composés du soufre.

6. Procédé selon l'une des revendications 1 à 4, **caractérisé en ce que** les courants de gaz utile (13, 14) sont purifiés avant un conditionnement du gaz, ce à l'occasion de quoi on élimine à l'aide de la purification entre autres la suie, les hydrocarbures à haut point d'ébullition, les hydrocarbures aromatiques, le soufre et les composés du soufre.

7. Procédé selon l'une des revendications 1 à 6, **caractérisé en ce que** la teneur en hydrogène d'au moins un courant de gaz utile (13, 14) est ajusté par séparation de l'hydrogène, par exemple par une installation d'adsorption par inversion de pression ou par enrichissement à l'hydrogène.

8. Procédé selon l'une des revendications 1 à 7, **caractérisé en ce qu'**au moins l'un des courants de gaz utile (13, 14) est enrichi en hydrogène qui est produit dans l'usine sidérurgique (1), de préférence par électrolyse de l'eau.

9. Procédé selon l'une des revendications 1 à 8, **caractérisé en ce que** la teneur en hydrogène d'au moins un courant de gaz utile (13, 14) est ajustée par conversion de CO dans une réaction du gaz à l'eau.

10. Procédé selon la revendication 8 ou 9, **caractérisé en ce que** la teneur en hydrogène d'au moins un courant de gaz utile (13, 14) est ajustée par reformage de CH₄.
